# EUROPÄISCHE PATENTSCHRIFT

(11) **EP 4 616 691 B1**
(45) Veröffentlichungstag und Bekanntmachung des Hinweises auf die Patenterteilung: **11.11.2026**
(21) Anmeldenummer: 24163183.7
(22) Anmeldetag: 13.03.2024
(51) Int. Cl.: A01B 59/06, A01B 63/102, A01B 63/112, A01B 76/00

(54) **VERFAHREN ZUR ERKENNUNG EINES BODENEINGREIFENDEN ANBAUGERÄTS AN EINEM LANDWIRTSCHAFTLICHEN TRAKTOR**
METHOD FOR DETECTING A GROUND ENGAGING IMPLEMENT ON AN AGRICULTURAL TRACTOR
PROCÉDÉ DE DÉTECTION D'UN OUTIL PORTÉ AU SOL SUR UN TRACTEUR AGRICOLE

(43) Veröffentlichungstag der Anmeldung: 17.09.2025
(73) Patentinhaber: Deere & Company, Moline, IL 61265 (US)
(72) Erfinder: PETERS, Benedikt, Mannheim (DE); SCHREIECK, Lucas, Mannheim (DE)
(74) Vertreter: Dehnhardt, Florian Christopher

(56) Entgegenhaltungen:
- EP-B1- 2 885 959
- EP-B1- 3 391 721
- JP-A- 2000 092 913

## Beschreibung

Die Erfindung betrifft ein Verfahren zur Erkennung eines bodeneingreifenden Anbaugeräts an einem landwirtschaftlichen Traktor, der einen heckseitigen Dreipunkt-Kraftheber mit linken und rechten Unterlenkern aufweist, die an unteren Befestigungsstellen des Dreipunkt-Krafthebers vertikalschwenkbar gelagert sind und sich mittels eines Hubwerks heben und senken lassen, wobei an wenigstens einer der unteren Befestigungsstellen eine Sensoranordnung vorgesehen ist, mittels derer eine an dem Unterlenker auftretende Zugkraft ermittelt wird. Die von der Sensoranordnung bereitgestellten Zugkraftinformationen bilden typischerweise die Grundlage für die Verwirklichung einer Zugkraftregelung, die die Arbeitstiefe eines bodeneingreifenden Anbaugeräts, wie beispielsweise eines Pflugs, einer Egge oder eines Grubbers, in Abhängigkeit der Bodenstruktur bzw. -dichte anpasst. Bei der Sensoranordnung handelt es sich in der Regel um einen Kraftmessbolzen, der integraler Bestandteil einer Lagerung des Unterlenkers innerhalb der Befestigungsstelle des Dreipunkt-Krafthebers ist.

Das Vorliegen eines vom Kraftmessbolzen erzeugten Zugkraftsignals lässt zwar auf das Vorhandensein eines bodeneingreifenden Anbaugeräts am Dreipunkt-Kraftheber schließen, dies jedoch erst mit Auftreten entsprechender Zugkräfte, also dann, wenn mit der Bodenbearbeitung bereits begonnen wird. Eine darüber hinausgehende Erkennung eines bodeneingreifenden Anbaugeräts am Dreipunkt-Kraftheber zu universellen Zwecken ist so nicht möglich. EP2885959 B1 offenbart ein Verfahren zur Erkennung eines an einem landwirtschaftlichen Traktor angebauten Arbeitsgeräts. JP2000092913 A offenbart ein Zugkraftregelungssystem zur Steuerung der Arbeitstiefe eines Bodenbearbeitungsgeräts.

Aufgabe der vorliegenden Erfindung ist es, ein Verfahren der eingangs genannten Art hinsichtlich der Erkennung eines an dem Dreipunkt-Kraftheber angebrachten bodeneingreifenden Anbaugeräts universell zu erweitern.

Diese Aufgabe wird durch ein Verfahren zur Erkennung eines bodeneingreifenden Anbaugeräts an einem landwirtschaftlichen Traktor mit den Merkmalen des Patentanspruchs 1 gelöst.

Bei einem Verfahren zur Erkennung eines bodeneingreifenden Anbaugeräts an einem landwirtschaftlichen Traktor weist der landwirtschaftliche Traktor einen heckseitigen Dreipunkt-Kraftheber mit linken und rechten Unterlenkern auf, die an unteren Befestigungsstellen des Dreipunkt-Krafthebers vertikalschwenkbar gelagert sind und sich mittels eines Hubwerks heben und senken lassen, wobei an wenigstens einer der unteren Befestigungsstellen eine Sensoranordnung vorgesehen ist, mittels derer eine an dem Unterlenker auftretende Zugkraft ermittelt wird. Hierbei wird von einer Kontrolleinheit auf ein an den Unterlenkern angebrachtes bodeneingreifendes Anbaugerät geschlossen, wenn diese erkennt, dass der Zugkraftverlauf beim Anheben der Unterlenker sich einem statischen Negativwert Δ_{F} annähert.

Diese Vorgehensweise macht sich die Beobachtung zunutze, dass die an den unteren Befestigungsstellen angreifende Zugkraft beim Absenken der Unterlenker aus einer angehobenen Transportstellung bis zum Zustandekommen eines Kontakts der bodeneingreifenden Bearbeitungswerkzeuge mit dem Untergrund einen im Wesentlichen statischen bzw. konstanten Negativwert Δ_{F} beibehält, um beim Vorwärtsfahren des landwirtschaftlichen Traktors mit zunehmendem Eintauchen in den Untergrund aufgrund des entgegengesetzten Bodenwiderstands kontinuierlich anzusteigen.

Der im Zugkraftverlauf beobachtete im Wesentlichen statische bzw. konstante Negativwert Δ_{F} wird hierbei durch die in der angehobenen Transportstellung über die Unterlenker in Richtung der unteren Befestigungsstellen wirkenden Gewichtskraftanteile des Anbaugeräts hervorgerufen.

Diese Information lässt sich universell insoweit verwenden, als diese insbesondere einen Rückschluss auf sich anbaugerätebedingt ändernde Masseverhältnisse am landwirtschaftlichen Traktor bzw. Dreipunkt-Kraftheber zulässt und damit Eingang in Verfahren zur Ballastierung oder aktiven Schwingungsdämpfung des landwirtschaftlichen Traktors finden können. Zu letzteren gehört eine aktive Vorderachsfederung, aber auch ein durch Aufschalten gegenphasiger Hubbewegungen am Dreipunkt-Kraftheber verwirklichter Schwingungstilger, wie er beispielsweise in der DE 10 2016 224 753 A1 beschrieben ist. Das Anbaugerät dient in diesem Fall als Tilgermasse. Auch lässt sich ein über ein Graphical User Interface (GUI) auswählbares Konfigurationsmenü einer Zugkraftregelung des landwirtschaftlichen Traktors automatisch freischalten. Bei nicht vorhandenem bodeneingreifenden Anbaugerät kann dieses auf dem Graphical User Interface inaktiv bzw. ausgegraut sein.

Des Weiteren kann für den im Zugkraftverlauf zwischen statischem bzw. konstantem Negativwert Δ_{F} und einsetzendem Zugkraftanstieg beobachteten Übergangspunkt die jeweilige Hubstellung p_{b} der Unterlenker erfasst und als Nullabstand der bodeneingreifenden Bearbeitungswerkzeuge für das betreffende Anbaugerät abgespeichert werden. Ausgehend von diesem Bezugswert ist zum Beispiel eine Höhenabstandsregelung der bodeneingreifenden Bearbeitungswerkzeuge zur Einebnung bzw. Glättung einer Untergrundkontur denkbar.

Vorteilhafte Weiterbildungen des erfindungsgemäßen Verfahrens gehen aus den Unteransprüchen hervor.

Insbesondere besteht die Möglichkeit, dass von der Kontrolleinheit abhängig vom Betrag des auftretenden statischen Negativwerts Δ_{F} auf eine bestimmte Anbaugerätekategorie geschlossen wird. Die Kategorisierung kann unter anderem hinsichtlich der Masse und/oder Schwerpunktlage des Anbaugeräts erfolgen, sodass insofern eine weitere Präzisierung der Masseverhältnisse möglich ist, die den vorstehend genannten Anwendungen zur aktiven Schwingungsdämpfung zugutekommen kann.

Umgekehrt kann von der Kontrolleinheit zuverlässig auf die Durchführung eines Abkuppelvorgangs des bodeneingreifenden Anbaugeräts geschlossen werden, wenn der statische Negativwert Δ_{F} bei erkanntem Stillstand des landwirtschaftlichen Traktors beim Absenken der Unterlenker gegen null geht und beim nachfolgenden Anfahren des landwirtschaftlichen Traktors unverändert bleibt.

Das erfindungsgemäße Verfahren wird im Folgenden anhand der beigefügten Zeichnungen näher erläutert. Es zeigen:
- Fig. 1: eine als Blockschaltbild veranschaulichte Anordnung zur Durchführung des erfindungsgemäßen Verfahrens zur Erkennung eines bodeneingreifenden Anbaugeräts an einem landwirtschaftlichen Traktor,
- Fig. 2: eine rückwärtige Ansicht des Dreipunkt-Krafthebers am landwirtschaftlichen Traktor gemäß Fig. 1, und
- Fig. 3: einen beispielhaften Zugkraftverlauf in Abhängigkeit der Hubstellung des Dreipunkt-Krafthebers bei daran angebrachtem bodeneingreifenden Anbaugerät in Gestalt eines Pflugs.

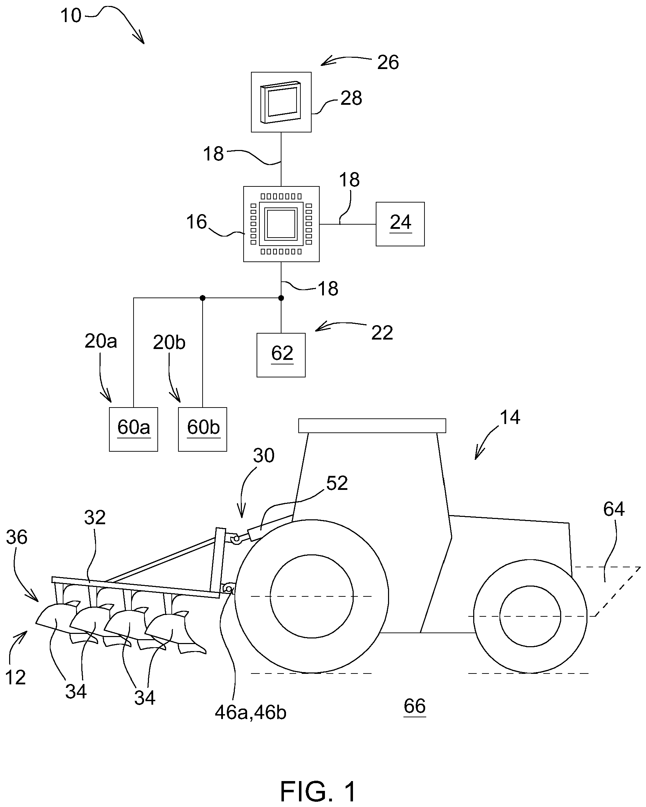

Fig. 1 zeigt eine als Blockschaltbild veranschaulichte Anordnung 10, anhand derer die Funktion des erfindungsgemäßen Verfahrens zur Erkennung eines bodeneingreifenden Anbaugeräts 12 an einem landwirtschaftlichen Traktor 14 erläutert werden soll.

Die in dem landwirtschaftlichen Traktor 14 befindliche Anordnung 10 umfasst eine mikroprozessorgesteuerte Kontrolleinheit 16, die über einen CAN-Datenbus 18 mit einer ersten Sensoranordnung 20a, einer zweiten Sensoranordnung 20b, einer dritten Sensoranordnung 22, einem lokalen Datenspeicher 24 sowie einem Graphical User Interface 26 (GUI) in Gestalt eines berührungsempfindlichen Displays 28 kommuniziert.

Ein heckseitig am landwirtschaftlichen Traktor 14 vorgesehener Dreipunkt-Kraftheber 30 dient der Anbringung unter anderem von Anbau- und Zusatzgeräten zur Bodenbearbeitung, beispielsgemäß des bodeneingreifenden Anbaugeräts 12 in Gestalt eines Pflugs 32 mit einer Vielzahl von als Pflugscharen 34 ausgebildeten bodeneingreifenden Bearbeitungswerkzeugen 36.

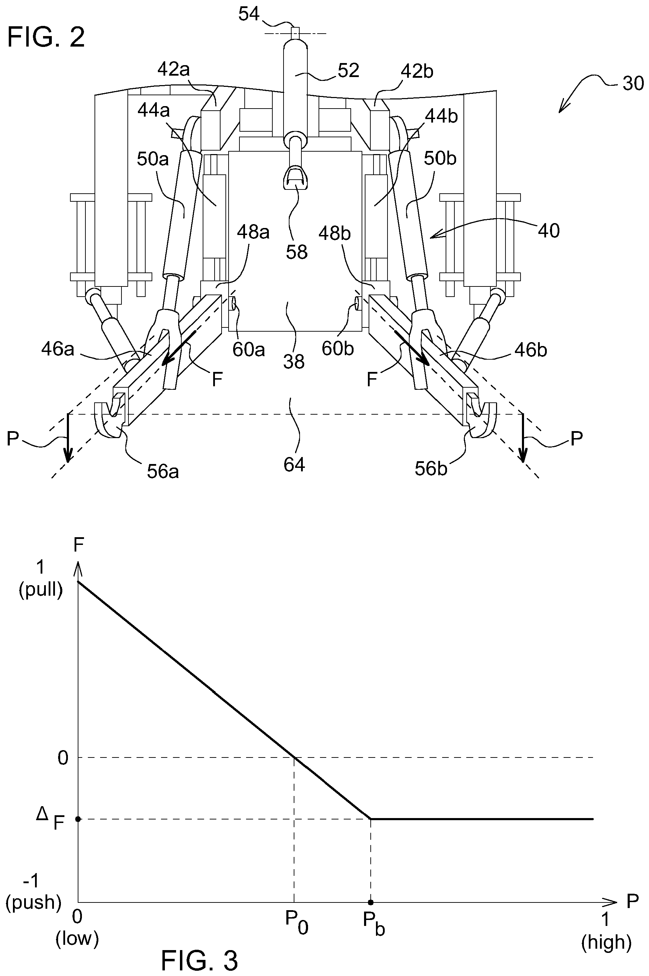

Der an einem Differentialgehäuse 38 des landwirtschaftlichen Traktors 14 angeordnete Dreipunkt-Kraftheber 30 ist in Fig. 2 im Detail von hinten gezeigt. Dieser ist von herkömmlicher Bauart und umfasst ein hydraulisch betätigbares Hubwerk 40 mit linken und rechten Hubarmen 42a, 42b, die sich mittels zugehöriger Hydraulikzylinder 44a, 44b, heben und senken lassen, sowie linke und rechte Unterlenker 46a, 46b, die an unteren Befestigungsstellen 48a, 48b des Dreipunkt-Krafthebers 30 vertikalschwenkbar gelagert und über längenverstellbare Hubstreben 50a, 50b mit den Hubarmen 42a, 42b bewegungsverbunden sind. Des Weiteren ist ein zentraler Oberlenker 52 vorhanden, der an einer oberen Befestigungsstelle 54 des Dreipunkt-Krafthebers 30 vertikalschwenkbar aufgehängt ist. Sowohl die Unterlenker 46a, 46b wie auch der Oberlenker 52 weisen lösbare Kupplungshaken 56a, 56b, 58 zur Aufnahme (nicht abgebildeter) komplementärer Kupplungselemente am bodeneingreifenden Anbaugerät 12 auf.

Bei der ersten und zweiten Sensoranordnung 20a, 20b handelt es sich um erste und zweite Kraftmessbolzen 60a, 60b, die integraler Bestandteil einer jeweiligen Lagerung der Unterlenker 46a, 46b innerhalb der unteren Befestigungsstellen 48a, 48b des Dreipunkt-Krafthebers 30 sind. Somit ist an jeder der beiden unteren Befestigungsstellen 48a, 48b ein separater Kraftmessbolzen 60a, 60b vorgesehen, der es ermöglicht, eine an den Unterlenkern 46a, 46b auftretende Zugkraft F zu ermitteln. Abweichend davon kann auch lediglich eine der beiden Sensoranordnungen 20a, 20b und damit ein einzelner der Kraftmessbolzen 60a, 60b Verwendung finden. Die dritte Sensoranordnung 22 ist als Positionsgeber 62 ausgebildet und dient der Erfassung der aktuellen Hubstellung p der Unterlenker 46a, 46b gegenüber einer definierten traktorfesten Bezugsebene 64. In Fig. 2 sind die beiden Unterlenker 46a, 46b beispielhaft in einer gegenüber der der Bezugsebene 64 abgesenkten Hubstellung p dargestellt.

Das erfindungsgemäße Verfahren wird von der Kontrolleinheit 16 mit Inbetriebnahme des landwirtschaftlichen Traktors 14 gestartet. Die Kontrolleinheit 16 ermittelt daraufhin kontinuierlich auf Grundlage der über den CAN-Datenbus 18 bereitgestellten Daten der Sensoranordnungen 20a, 20b, 22 die Zugkraft F abhängig von der aktuellen Hubstellung p der Unterlenker 46a, 46b und damit den Zugkraftverlauf F(p). Hierbei wird von der Kontrolleinheit 16 auf das an den Unterlenkern 46a, 46b angebrachte bodeneingreifende Anbaugerät 12 geschlossen, wenn diese erkennt, dass der ermittelte Zugkraftverlauf F(p) beim Anheben der Unterlenker 46a, 46b sich einem statischen Negativwert Δ_{F} annähert.

Dieses Verhalten ist in Fig. 3 beispielhaft für den am Dreipunkt-Kraftheber 30 angebrachten Pflug 32 wiedergegeben, wobei Zugkraft F und Hubstellung p jeweils auf eins normiert sind. Wie zu erkennen ist, behält die an den unteren Befestigungsstellen 48a, 48b angreifende Zugkraft F beim Absenken der Unterlenker 46a, 46b aus einer angehobenen Transportstellung bis zum Zustandekommen eines Kontakts der Pflugscharen 34 mit dem Untergrund 66 einen im Wesentlichen statischen bzw. konstanten Negativwert Δ_{F} bei, um beim Vorwärtsfahren des landwirtschaftlichen Traktors 14 mit zunehmendem Eintauchen der Pflugscharen 34 in den Untergrund 66 aufgrund des entgegengesetzten Bodenwiderstands kontinuierlich anzusteigen.

Der im Zugkraftverlauf F(p) beobachtete im Wesentlichen statische bzw. konstante Negativwert Δ_{F} wird hierbei durch die in der über eine Neutralstellung p₀ hinaus angehobenen Transportstellung über die Unterlenker 46a, 46b in Richtung der unteren Befestigungsstellen 48a, 48b wirkenden Gewichtskraftanteile des Pflugs 32 hervorgerufen.

Ergänzend wird von der Kontrolleinheit 16 abhängig vom Betrag des auftretenden statischen bzw. konstanten Negativwerts Δ_{F} auf eine bestimmte Anbaugerätekategorie geschlossen. Die Kategorisierung erfolgt unter anderem hinsichtlich der Masse und/oder Schwerpunktlage des bodeneingreifenden Anbaugeräts 12, sodass insofern eine weitere Präzisierung der Masseverhältnisse möglich ist. Die entsprechenden Zuordnungen sind im lokalen Datenspeicher 24 hinterlegt und können von dort von der Kontrolleinheit 16 abgerufen werden.

Diese Informationen lassen sich universell insoweit verwenden, als diese einen Rückschluss auf sich anbaugerätebedingt ändernde Masseverhältnisse am landwirtschaftlichen Traktor 14 bzw. Dreipunkt-Kraftheber 30 zulassen und damit Eingang in Verfahren zur Ballastierung oder aktiven Schwingungsdämpfung des landwirtschaftlichen Traktors 14 finden können. Zu letzteren gehört eine aktive Vorderachsfederung, aber auch ein durch Aufschalten gegenphasiger Hubbewegungen am Dreipunkt-Kraftheber 30 verwirklichter Schwingungstilger, wie er beispielsweise in der DE 10 2016 224 753 A1 beschrieben ist. Das Anbaugerät 12 dient in diesem Fall als Tilgermasse. Auch lässt sich ein über das Graphical User Interface 26 bzw. dessen Display 28 auswählbares Konfigurationsmenü einer Zugkraftregelung des landwirtschaftlichen Traktors 14 automatisch freischalten. Bei nicht vorhandenem bodeneingreifenden Anbaugerät 12 kann dieses auf dem Graphical User Interface 26 bzw. dessen Display 28 inaktiv bzw. ausgegraut sein.

Des Weiteren wird von der Kontrolleinheit 16 für den im Zugkraftverlauf F(p) zwischen statischem bzw. konstantem Negativwert Δ_{F} und einsetzendem Zugkraftanstieg beobachteten Übergangspunkt die jeweilige Hubstellung p_{b} der Unterlenker 46a, 46b erfasst (siehe hierzu Fig. 3) und als Nullabstand der bodeneingreifenden Bearbeitungswerkzeuge 36 für das betreffende Anbaugerät 12 im lokalen Datenspeicher 24 abgelegt. Ausgehend von diesem Bezugswert erfolgt zum Beispiel eine Höhenabstandsregelung der bodeneingreifenden Bearbeitungswerkzeuge 36 zur Einebnung bzw. Glättung einer Untergrundkontur.

Umgekehrt wird von der Kontrolleinheit 16 auf die Durchführung eines Abkuppelvorgangs des bodeneingreifenden Anbaugeräts 12 geschlossen werden, wenn der statische Negativwert Δ_{F} bei erkanntem Stillstand des landwirtschaftlichen Traktors 14 beim Absenken der Unterlenker 46a, 46b gegen null geht und beim nachfolgenden Anfahren unverändert bleibt.

## Patentansprüche

1. Verfahren zur Erkennung eines bodeneingreifenden Anbaugeräts an einem landwirtschaftlichen Traktor, der einen heckseitigen Dreipunkt-Kraftheber (30) mit linken und rechten Unterlenkern (46a, 46b) aufweist, die an unteren Befestigungsstellen (48a, 48b) des Dreipunkt-Krafthebers (30) vertikalschwenkbar gelagert sind und sich mittels eines Hubwerks (40) heben und senken lassen, wobei an wenigstens einer der unteren Befestigungsstellen (48a, 48b) eine Sensoranordnung (20a, 20b) vorgesehen ist, mittels derer eine an dem Unterlenker (46a, 46b) auftretende Zugkraft (F) ermittelt wird, **dadurch gekennzeichnet, dass** von einer Kontrolleinheit (16) auf ein an den Unterlenkern (46a, 46b) angebrachtes bodeneingreifendes Anbaugerät (12) geschlossen wird, wenn diese erkennt, dass der Zugkraftverlauf (F(p)) beim Anheben der Unterlenker (46a, 46b) sich einem statischen Negativwert (Δ_{F}) annähert.

2. Verfahren nach Anspruch 1, **dadurch gekennzeichnet, dass** von der Kontrolleinheit (16) abhängig vom Betrag des auftretenden statischen Negativwerts (Δ_{F}) auf eine bestimmte Anbaugerätekategorie geschlossen wird.

3. Verfahren nach Anspruch 1 oder 2, **dadurch gekennzeichnet, dass** von der Kontrolleinheit (16) auf die Durchführung eines Abkuppelvorgangs des bodeneingreifenden Anbaugeräts (12) geschlossen wird, wenn der statische Negativwert (Δ_{F}) bei erkanntem Stillstand des landwirtschaftlichen Traktors (14) beim Absenken der Unterlenker (46a, 46b) gegen null geht und beim nachfolgenden Anfahren des landwirtschaftlichen Traktors (14) unverändert bleibt.

## Claims

1. Method for identifying a ground-penetrating accessory on an agricultural tractor which has a rear three-point power lift (30) having left and right lower links (46a, 46b) which are supported at lower securing locations (48a, 48b) of the three-point power lift (30) so as to be able to be pivoted vertically and which can be raised and lowered by means of a lifting mechanism (40), wherein at least at one of the lower securing locations (48a, 48b) there is provided a sensor arrangement (20a, 20b) by means of which a tensile force (F) occurring on the lower link (46a, 46b) is established, **characterized in that** a control unit (16) draws a conclusion relating to a ground-penetrating accessory (12) which is attached to the lower links (46a, 46b) when it identifies that the tensile force path (F(p)) when the lower links (46a, 46b) are raised approaches a static negative value (Δ_{F}).

2. Method according to Claim 1, **characterized in that** the control unit (16) depending on the value of the static negative value (Δ_{F}) which occurs concludes a specific accessory category.

3. Method according to Claim 1 or 2, **characterized in that** the control unit (16) concludes that a decoupling operation of the ground-penetrating accessory (12) has been carried out when the static negative value (Δ_{F}) approaches zero when a stoppage of the agricultural tractor (14) has been identified when the lower links (46a, 46b) are lowered and remains unchanged when the agricultural tractor (14) is subsequently started up.

## Revendications

1. Procédé de détection d'un outil porté pénétrant dans le sol sur un tracteur agricole, qui présente un relevage trois points arrière (30) avec des bras inférieurs gauche et droit (46a, 46b), qui sont montés de manière à pouvoir pivoter verticalement au niveau de points de fixation inférieurs (48a, 48b) du relevage trois points (30) et peuvent être levés et abaissés au moyen d'un mécanisme de levage (40), un agencement de capteurs (20a, 20b) étant prévu au niveau d'au moins l'un des points de fixation inférieurs (48a, 48b), au moyen duquel une force de traction (F) apparaissant sur le bras inférieur (46a, 46b) est déterminée, **caractérisé en ce qu'**une unité de commande (16) conclut à la présence d'un outil porté pénétrant dans le sol (12) monté sur les bras inférieurs (46a, 46b) lorsqu'elle détecte que l'évolution de la force de traction (F(p)), lors du levage des bras inférieurs (46a, 46b), se rapproche d'une valeur négative statique (ΔF).

2. Procédé selon la revendication 1, **caractérisé en ce que** l'unité de commande (16) conclut à une catégorie déterminée d'outil porté en fonction de la valeur de la valeur négative statique (ΔF) apparaissant.

3. Procédé selon la revendication 1 ou 2, **caractérisé en ce que** l'unité de commande (16) conclut à l'exécution d'une opération de dételage de l'outil porté pénétrant dans le sol (12) lorsque la valeur négative statique (ΔF), en cas de détection de l'arrêt du tracteur agricole (14), tend vers zéro lors de l'abaissement des bras inférieurs (46a, 46b) et reste inchangée lors du démarrage ultérieur du tracteur agricole (14).
